# EUROPÄISCHE PATENTSCHRIFT

(11) **EP 1 540 221 B1**
(45) Veröffentlichungstag und Bekanntmachung des Hinweises auf die Patenterteilung: **03.09.2008**
(21) Anmeldenummer: 03766099.0
(22) Anmeldetag: 07.07.2003
(51) Int. Cl.: F16L 7/02, G02B 6/50, H02G 9/10, E03F 3/00, H02G 1/08

(54) **VERFAHREN ZUM AUSHÄRTEN EINER DURCH WÄRME AUSHÄRTBAREN MATRIX**
METHOD FOR CURING A THERMOCURABLE MATRIX
PROCEDE DE DURCISSEMENT D'UNE MATRICE THERMODURCISSABLE L'INVENTION CONCERNE L'INVENTION CONCERNE

(30) Priorität: 06.08.2002 CH 136102
(43) Veröffentlichungstag der Anmeldung: 15.06.2005
(73) Patentinhaber: Prusate Foundation, 9494 Schaan (LI)
(72) Erfinder: PRUSAK, Martin, CH-9036 Grub (CH)
(74) Vertreter: Gachnang, Hans Rudolf
(86) Internationale Anmeldenummer: PCT/CH2003/000447
(87) Internationale Veröffentlichungsnummer: WO 2004/013529

(56) Entgegenhaltungen:
- EP-A- 1 262 809
- WO-A-02/01107
- FR-A- 2 825 772
- US-A1- 2001 010 781

## Beschreibung

Gegenstand der Erfindung ist ein Verfahren zum Aushärten gemäss Oberbegriff des Patentanspruchs 1.

Die Verlegung von Kommunikations- und anderer Zuleitungen in bebauten Gebieten, insbesondere in städtischen Gebieten, ist mit riesigen Kosten verbunden. Seit einigen Jahren ist bekannt, Datenübertragungskabel in bestehende Abwasserleitungen, d.h. Entsorgungsleitungen, zu verlegen. Anfänglich wurden diese Kabel mittels Klammern und anderen aus der Technik bekannten Befestigungselementen direkt ins Innere der Entsorgungsleitungen eingebracht und mit mechanischen Mitteln befestigt.
Die chemische und mechanische Belastung durch Abwässer und allfällige Reinigungsmassnahmen mit Bürsten oder Wasserstrahl, welche zur Zerstörung der eingelegten Rohre führen können, haben dazu geführt, nach neuen Methoden für die Verlegung zu suchen. Eine solche besteht darin, die Leitungen zwischen einen in die Entsorgungsleitung eingelegten aus einem aushärtbaren Material bestehenden Schlauch und die Kanal- oder Leitungswandung einzulegen. Damit gelingt es einerseits, beschädigte Abwasserleitungen zu sanieren und andererseits Datenleitungen geschützt von chemischen und mechanischen Einflüssen zu verlegen. Dieses Verfahren eignet sich dort, wo ohnehin eine Sanierung der Abwasserleitungen ansteht. Sollen aber ausschliesslich Datenleitungen verlegt werden, mit denen ohne jegliche Grabarbeiten beliebige Gebäude einer Stadt erreichbar sind, so sind die Kosten für diese Verlegungsart zu hoch.

Aus der WO 02/01107 ist es bekannt, Datenkabel oder Datenkabel aufnehmende Rohre in einen Streifen aus einem textilen Gewebe, Gewirk oder dergleichen einzulegen und diesen Streifen an geeigneter Stelle innerhalb von Abwasserleitungen mit deren Wandung zu verbinden. Für eine optimale Verbindung der aushärtbaren Matrix des Streifens, z.B. Epoxiharz oder dergleichen, wird der Streifen mit einem eine Kamera tragenden Roboter in das Rohr eingebracht und anschliessend mit einem dehnbaren Schlauch an die Wandung der Leitung angepresst und danach der Schlauch mit einem heissen Medium, meist heissem Wasser, gefüllt. Dieses heisse Wasser wird für einige Stunden im Rohr umgewälzt und es gelingt so, die Matrix des Streifens auszuhärten und eine unlösbare Verbindung zur Leitungswandung herzustellen. Danach wird der Schlauch wieder entfernt. Die Aufbereitung und Warmhaltung grosser Mengen von Wasser ist aufwändig, wenn man bedenkt, dass beispielsweise ein Leitungsabschnitt von zweihundert Metern Länge bei einem Leitungsquerschnitt von einem Meter fast hundertsechzigtausend Liter heisses Wasser benötigt. Dieses kann nur einmal benutzt werden, denn es bestehen üblicherweise keine Aufnahmemittel, die solche Mengen speichern können, bis wiederum ein entsprechender Abschnitt von verlegten Streifen auszuhärten ist.

Aufgabe der vorliegenden Erfindung ist daher die Schaffung eines Verfahrens, das auf kostengünstige Weise eine optimale Aushärtung von Rohren für Datenkabel, Elektrokabel oder ein Gas oder Flüssigkeit führende Rohre tragende Streifen aus aushärtbarem Material ermöglicht.

Gelöst wird diese Aufgabe durch ein Verfahren gemäss den Merkmalen des Patentanspruchs 1. Vorteilhafte Ausgestaltungen der Erfindung werden in den abhängigen Ansprüchen definiert.

Die temporäre Verwendung der beispielsweise für das Aufnehmen von Datenkabeln bereits in Streifen eingelegten Rohren zum Einbringen der notwendigen Aushärtewärme ist nicht nur um ein Vielfaches kostengünstiger, sondern die Wärme wird gezielt nur dort eingebracht, wo sie benötigt wird. Wenige Liter Wasser, die in einem einfachen, beispielsweise gasbetriebenen Durchlauferhitzer erwärmt bzw. während des Aushärtens warmgehalten werden können, genügen, um einen Streifen von der Länge von hundert und mehr Metern auszuhärten. Obwohl die Wärme nur in dem mindestens einen im Streifen vorhandenen Rohr geführt und abgegeben wird, gelingt es, den Streifen über seine gesamte Breite auszuhärten. Bei mehreren Datenkabel aufnehmenden Rohren kann das heisse Wasser durch Verbinden der Rohrenden an einem Ende des Streifens zirkuliert werden und folglich muss nicht das am Ende austretende Wasser ausserhalb des Streifens zurückgeführt oder stets neues heisses Wasser zugeführt werden. Bei mindestens zwei Rohren kann das heisse Wasser in Gegenstrom fliessen. Dies führt zu einer gleichmässigen Wärmezufuhr an den Streifen über die gesamte Länge des Streifens.

Anhand eines illustrierten Ausführungsbeispiels für die Verlegung von Datenkabel aufnehmenden Rohren in Entsorgungsleitungen wird die Erfindung näher erläutert. Es zeigen
- Figur 1: einen Querschnitt durch eine kommunale Entsorgungs- oder eine Versorgungsleitung,
- Figur 2: einen Querschnitt durch einen Strassenzug mit zwei Schächten und einer zwischen den Schächten verlaufenden Entsorgungsleitung,
- Figur 3: einen Querschnitt durch eine kommunale Entsorgungsleitung zwischen zwei Schächten vergrössert dargestellt,
- Figur 4: einen Längsschnitt durch die Leitung 1 und den flexiblen Schlauch 7 während des Umstülpens und Anlegens an den bereits in der Leitung liegenden mit einem Roboter ausgelegten Streifen.

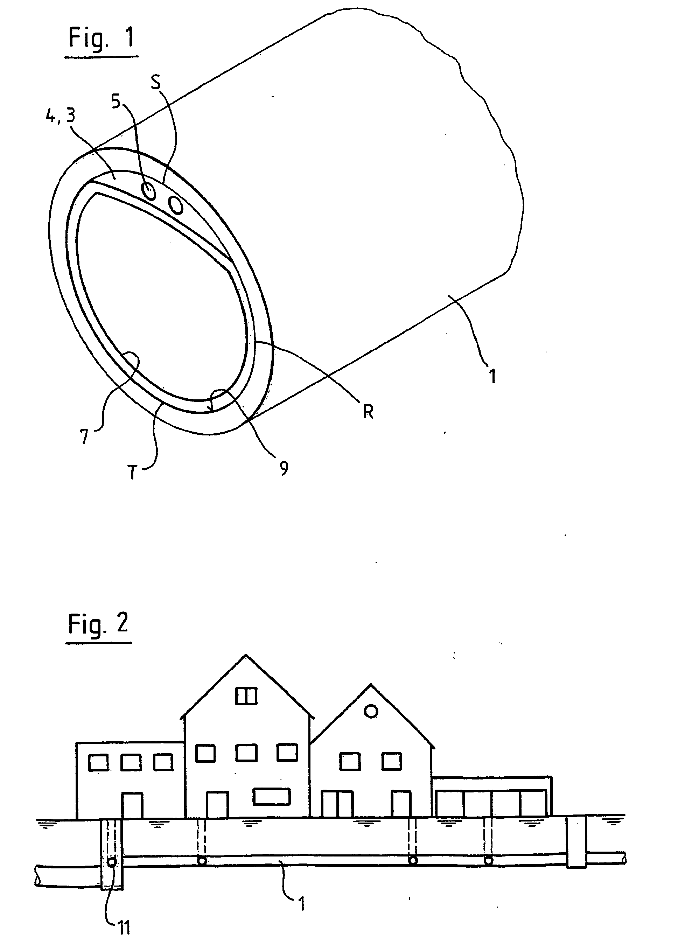

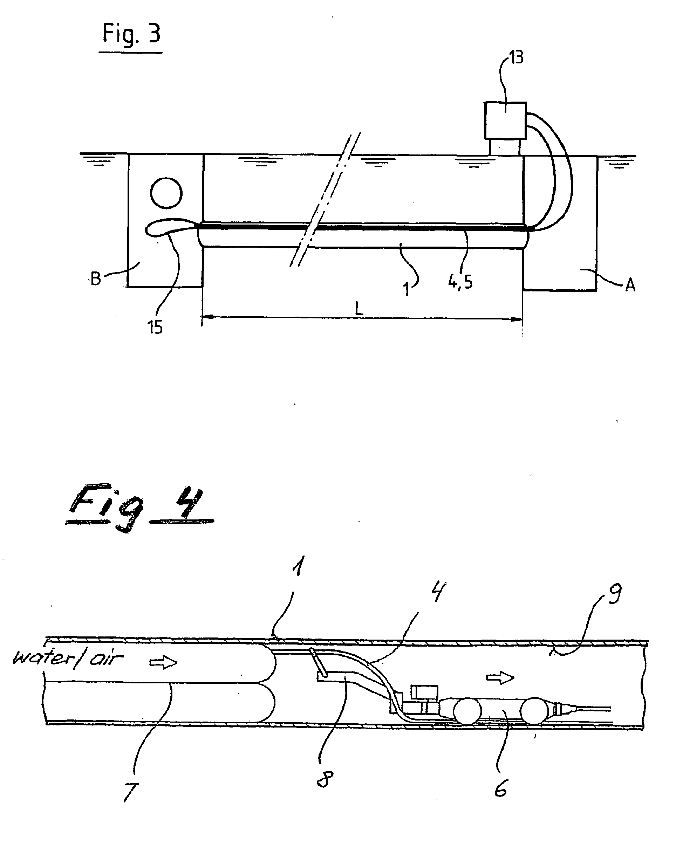

In Figur 1 ist mit Bezugszeichen 1 ein Leitungsrohr oder -kanal aus Stahl, Beton, Keramik oder Kunststoff dargestellt, in dessen Scheitel S ein sichelförmiger Streifen 4 aus einem Gewebegelege oder dergleichen sichtbar ist. Im Streifen 5 sind beispielsweise zwei Leerrohre, kurz Rohre 5, für die Aufnahme von Daten- oder Elektrokabeln eingebettet. Gehalten wird der Streifen 4 in der hier dargestellten Lage durch einen dehnbaren Schlauch 7, der beispielsweise mit Luft gefüllt ist. Selbstverständlich könnte der Streifen 4 auch seitlich bei R oder unten bei T an der Leitungsinnenwand 9 anliegen und dort vor dem Einführen des Schlauchs 7 provisorisch befestigt sein oder von einem Roboter 6 bzw. des Verlegearms 8 gehalten werden. Dies insbesondere dann, wenn der Streifen 4 um seitliche Abzweigleitungen 11 in der Entsorgungsleitung 1 herumgeführt werden muss oder wenn der Streifen 4 in eine seitlich abzweigende Leitung 11 eingeleitet werden soll (Figur 3). Der Streifen 4 bzw. die den Streifen 4 bildende textile Tragstruktur ist mit einem thermisch aushärtbaren Harz als Matrix 3 getränkt. Das Einlegen des Streifens 4 in die Leitung 1 kann auf verschiedene Weise erfolgen. Das bevorzugte Verfahren benützt dazu einen Roboter 6, der den Streifen 4 in die Leitung 1 einlegt und dort an geeigneter Stelle der Rohrinnenwand 9 anlegt. Unmittelbar danach wird der aufblasbare flexible Schlauch 7 eingeführt und zwar vorzugsweise in einem Stülpverfahren, d.h. durch Einblasen von Luft oder Einpumpen von Wasser wandert die Umstülpung von der Eintrittsseite zur Austrittsseite und der Schlauch 7 legt sich ohne Relativbewegung zum Streifen 4, der vom Roboterarm 8 abgelegt wird, an den Streifen 4 an und presst diesen, sobald genügend Druck in der Leitung 7 aufgebaut ist, gleichmässig und fest an die Innenwand 9 der Leitung 1 (Figur 4). Wenn diese Vorarbeiten beendet sind, wird das mindestens eine Rohr 5 mit einem Wassererhitzer, z.B. einem Durchlauferhitzer 13 verbunden. Der Durchlauferhitzer 13 kann mit Gas oder mit Elektrizität betrieben werden. Sind zwei Rohre 5 im Streifen 4 eingelegt, so können diese in einer bevorzugten Ausgestaltung der Erfindung am gegenüberliegenden Ende des Abwasserleitungs-Abschnitts L durch ein schlaufenförmig gelegtes Verbindungsrohr 15 miteinander verbunden werden, so dass das heisse Wasser, das durch das erste Rohr 5 vom Schacht A zum Schacht B gefördert wird, dort umgelenkt zurück in den Wassererwärmer 13 fliessen kann (Figur 3).

Durch diese Massnahme kann nebst einer optimalen Ausnutzung des erwärmten Wassers auch eine optimale Wärmeverteilung längs des auszuhärtenden Abschnitts L zwischen den beiden Schächten A und B erreicht werden.

Für die Dehnung des flexiblen Schlauchs 7 zum Anpressen des Streifens 4 genügt in diesem Fall Kaltluft oder kaltes Wasser, die bzw. das einerseits schnell und vor allem kostengünstig in den Schlauch 7 eingepresst werden kann. Allfällige kleine Leckstellen des Schlauchs 7 sind nicht von grossem Belang, da der Leckageverlust ohne weiteres von der Pumpe ausgeglichen werden kann. Der Schlauch 7 und die für das Aufblasen oder das Zuführen von kalten Wasser notwendige Pumpe sind in Figur 3 der besseren Übersichtlichkeit halber weggelassen.

Die Dauer der Wärmebehandlung des Streifens 4 durch Hindurchführen von heissem Wasser und die Temperatur des Wassers müssen von Fall zu Fall bestimmt werden und hängen vom verwendeten Harz ab, das als Matrix 3 für den Streifen 4 eingesetzt wird.

Die Erfindung wurde anhand der Verlegung von Datenkabel aufnehmenden Streifen 4 aus textilem Material und einer aushärtbaren Matrix 3 in nicht begehbare Abwasserleitungen beschrieben. Selbstverständlich kann das gleiche Verfahren auch in begehbaren Kanälen, wie sie in grösseren Städten üblich sind, angewendet werden. Anstelle von einem unter Druck befindlichen Schlauch 7 zum temporären Anpressen des Streifens 4 mit den darin eingebetteten Rohren 5 können andere Mittel wie beispielsweise Latten oder Bretter verwendet werden, mit denen der Streifen 4 temporär an die Wand 9 anpressbar ist, an der dieser haften soll. Auch können anstelle von Datenleitungen aufnehmenden Rohren 5 Rohre für das Führen von Elektrokabeln auf diese Weise befestigt werden. Ebenso ist es möglich, mit dem erfindungsgemässen Verfahren Rohre, in denen später beispielsweise Wasser oder Gas zu Gebäuden geleitet werden soll, auf diese Weise in Leitungen oder Kanäle einzulegen. Es ist folglich möglich, innerhalb eines Abwasserrohres auch die Frischwasser- und Gaszuführrohre sowie die Datenkabel aufnehmenden Rohre zu führen bzw. diese nachträglich in Abwasserleitungen oder auch in grösseren Gaszuführleitungen einzubringen, ohne Grabarbeiten mit den entsprechend hohen Kosten vornehmen zu müssen.

## Patentansprüche

1. Verfahren zum Aushärten von in kommunale Versorgungs-und Entsorgungsleitungen und -kanälen (1) verlegten und mittels eines textilen Befestigungsstreifens (4) mit einer durch Wärme aushärtbaren Matrix (3) an der Leitungsinnenseite (9) befestigter Rohre (5) zur Aufnahme von Datenkabeln, Elektrokabeln und/oder gasförmige oder flüssige Stoffe führenden Rohren mit einem heissen Medium, **dadurch gekennzeichnet, dass** das heisse Medium nach dem Anpressen des Streifens (4) an die Leitungs- oder Kanalwand mit dem mindestens einen darin eingebetteten Rohr (5) durch das mindestens eine Rohr (5) hindurchgeleitet wird.

2. Verfahren zum Aushärten nach Anspruch 1, **dadurch gekennzeichnet, dass** als Medium heisses Wasser oder Heissdampf verwendet wird.

3. Verfahren zum Aushärten nach Anspruch 1 oder Anspruch 2, **dadurch gekennzeichnet, dass** das Medium abwechselnd aus beiden Richtungen in das mindestens eine Rohr (5) eingeleitet wird.

4. Verfahren zum Aushärten nach einem der Ansprüche 1 bis 3, **dadurch gekennzeichnet, dass** bei mehreren Rohren (5) das Medium durch Verbinden der Rohre (5) an einem Ende im Gegenstrom geführt wird.

5. Verfahren zum Aushärten nach einem der Ansprüche 1 bis 4, **dadurch gekennzeichnet, dass** der Streifen (4) während des Aushärtens durch einen dehnbaren Schlauch (7) an der Innenwand (9) der Leitung (1) angepresst wird.

6. Verfahren zum Aushärten nach einem der Ansprüche 1 bis 4, **dadurch gekennzeichnet, dass** der Streifen (4) während des Aushärtens durch ein Brett oder eine Latte an der Innenwand (9) der Leitung (1) angepresst wird.

7. Verfahren zum Aushärten nach einem der Ansprüche 1 bis 6, **dadurch gekennzeichnet, dass** der Streifen (4) durch den Arm (8) eines in der Leitung (1) fahrenden Roboters (6) unmittelbar vor dem vorderen Ende eines sich in der Leitung (1) umstülpenden dehnbaren Schlauchs (7) an die Innenwand (9) positioniert wird.

## Claims

1. Method for the curing of pipes (5) for accommodating data cable or electric cable and/or pipes guiding gaseous or fluid substances with a hot medium, the said pipes being laid in municipal supply and waste lines and ducts (1) and being secured by means of a textile securing strip (4) with a thermo-curable matrix (3) on the liner (9), **characterised in that** the hot medium, after pressing the strip (4) against the line or duct wall with the at least one pipe (5) embedded therein, is conducted through the at least one pipe (5).

2. Method for curing according to claim 1, **characterised in that** hot water or hot steam is used as the medium.

3. Method for curing according to claim 1 or claim 2, **characterised in that** the medium is introduced alternately from two directions into the at least one pipe (5).

4. Method for curing according to one of claims 1 to 3, **characterised in that** where there are several pipes (5), the medium is guided in the counter current by connecting the pipes (5) at one end.

5. Method for curing according to one of claims 1 to 4, **characterised in that** during curing the strip (4) is pressed by an expandable flexible tube (7) against the inside wall (9) of the line (1).

6. Method for curing according to one of claims 1 to 4, **characterised in that** the strip (4) is pressed against the inside wall (9) of the line (1) by a board or a slat during curing.

7. Method for curing according to one of claims 1 to 6, **characterised in that** the strip (4) is positioned onto the inside wall (9) by the arm (8) of a robot (6) that travels in the line (1) directly in front of the front end of an expandable flexible tube (7) that can be inverted in the line (1).

## Revendications

1. Procédé de durcissement de tubes (5) destinés à recevoir des câbles de données, des câbles électriques et/ou de tubes conduisant des substances gazeuses ou liquides posés dans des conduites et canalisations communales d'alimentation et d'évacuation (1) et fixés au moyen d'une bande de fixation textile (4) avec une matrice (3) durcissable à la chaleur sur le côté intérieur de conduite (9), au moyen d'un fluide chaud, **caractérisé en ce que** le fluide chaud, après que la bande (4) a été pressée contre la paroi de conduite ou de canalisation avec le tube (5) au nombre d'au moins un noyé dedans, est conduit à travers le tube (5) au nombre d'au moins un.

2. Procédé de durcissement selon la revendication 1, **caractérisé en ce que** de l'eau chaude ou de la vapeur chaude est utilisée comme fluide.

3. Procédé de durcissement selon la revendication 1 ou la revendication 2, **caractérisé en ce que** le fluide est introduit alternativement depuis les deux sens dans le tube (5) au nombre d'au moins un.

4. Procédé de durcissement selon l'une des revendications 1 à 3, **caractérisé en ce que,** si plusieurs tubes (5) sont présents, le fluide est conduit en flux opposés par liaison des tubes (5) à une extrémité.

5. Procédé de durcissement selon l'une des revendications 1 à 4, **caractérisé en ce que** pendant le durcissement, la bande (4) est pressée contre la paroi intérieure (9) de la conduite (1) par un tuyau extensible (7).

6. Procédé de durcissement selon l'une des revendications 1 à 4, **caractérisé en ce que** pendant le durcissement, la bande (4) est pressée contre la paroi intérieure (9) de la conduite (1) par une planche ou une latte.

7. Procédé de durcissement selon l'une des revendications 1 à 6, **caractérisé en ce que** la bande (4) est positionnée sur la paroi intérieure (9), par le bras (8) d'un robot (6) se déplaçant dans la conduite (1), immédiatement devant l'extrémité avant d'un tuyau extensible (7) se retournant dans la conduite (1).
